# EUROPEAN PATENT SPECIFICATION

(11) **EP 3 178 259 B1**
(45) Date of publication and mention of the grant of the patent: **14.07.2021**
(21) Application number: 15830402.2
(22) Date of filing: 04.08.2015
(51) Int. Cl.: H04W 48/16, H04W 48/14, H04W 84/12, H04W 8/00

(54) **ELECTRONIC DEVICE AND METHOD FOR CONTROLLING INFORMATION EXCHANGE IN ELECTRONIC DEVICE**
ELEKTRONISCHE VORRICHTUNG UND VERFAHREN ZUR STEUERUNG DES INFORMATIONSAUSTAUSCHS IN DER ELEKTRONISCHEN VORRICHTUNG
DISPOSITIF ÉLECTRONIQUE ET PROCÉDÉ DE COMMANDE D'ÉCHANGE D'INFORMATIONS DANS UN DISPOSITIF ÉLECTRONIQUE

(30) Priority: 04.08.2014 KR 20140099889
(43) Date of publication of application: 14.06.2017
(73) Proprietor: Samsung Electronics Co., Ltd., Gyeonggi-do 16677 (KR)
(72) Inventor: JUNG, Bu-Seop, Suwon-si Gyeonggi-do 16677 (KR); KANG, Ki-Seok, Suwon-si Gyeonggi-do 16677 (KR); CHUNG, Young-Kwan, Suwon-si Gyeonggi-do 16677 (KR); CHOI, Yong-Hae, Suwon-si Gyeonggi-do 16677 (KR); CHOI, Jong-Mu, Suwon-si Gyeonggi-do 16677 (KR)
(74) Representative: Nederlandsch Octrooibureau
(86) International application number: PCT/KR2015/008147
(87) International publication number: WO 2016/021917

(56) References cited:
- EP-A1- 2 037 632
- WO-A1-2014/098437
- US-A1- 2010 153 517
- US-A1- 2010 322 213
- US-A1- 2010 322 213
- US-A1- 2012 209 934
- US-A1- 2014 112 325
- US-B1- 8 504 655
- Ruckus: "How Interworking Works: A Detailed Look at 802.11u and Hotspot 2.0 Mechanisms", , 1 July 2013 (2013-07-01), XP055151427, Retrieved from the Internet: URL:http://a030f85c1e25003d7609-b98377aee9 68aad08453374eb1df3398.r40.cf2.rackcdn.com /wp/wp-how-interworking-works.pdf [retrieved on 2014-11-06]

## Description

### [Technical Field]

The present disclosure relates to electronic devices and methods for controlling information exchange by electronic devices.

### [Background Art]

802.11u has been established to provide for discovery of information from an external network connected with an access point (AP). As per this communication standard, an electronic device may discover the external network even before associated with the AP.

Access Network Query Protocol (ANQP), an 802.11u protocol, enables the electronic device to conduct network discovery with an external information server through Generic Advertisement Service (GAS) initial request/response frames designated as action frames in the 802.11 version. The network discovery may be carried out regardless of whether the electronic device is linked with the AP.

If the electronic device sends a query for ANQP information to the AP through a GAS initial request frame, the AP transfers the query to the information server (e.g., an ANQP server) and receives a response from the information server. The AP then transmits the received response to the electronic device through a GAS initial response frame. If the server's response is delayed (so-called "came-back delay"), the AP sends the GAS initial response without the ANQP information to advise the electronic device of the delay. The electronic device may obtain the ANQP information by exchanging GAS comeback request/response frames after the comeback delay.

Hotspot (HS) 2.0 is a representative technique to put the 802.11u standard in use for network discovery. The HS 2.0 specification facilitates seamless roaming between a Wi-Fi equipped electronic device and a public Wi-Fi network. An HS 2.0-supportive AP allows for simultaneous discovery of a number of information servers connected thereto.

US 2014/0112325 A1 relates to a system and method for efficient access network query protocol discovery of multiple access points.

The white paper "How Interworking Works: A Detailed Look at 802.11u and Hotspot 2.0 Mechanism" from Ruckus, published in July 2013, is focusing on 802.11u/Hotspot 2.0 protocol enhancements, especially as it relates to security, easier access and more user friendly operation. The document discloses the network discovery and selection process, in more particular the network selection concept by exploring how GAS and ANQP are implemented in the query process. In the advertisement protocol process disclosed (see fig. 9), the message exchange comprises GAS frames including ANQP elements. Thus, the client sends a GAS request, providing a list of ANQP elements that it wants to receive from the AP. The AP either satisfies the query out of its own configured datastore or relays the client's query to backend advertisement servers. The AP replies to the client with a GAS response, which includes the ANQP elements requested by the client.

### [Disclosure of Invention]

### [Technical Problem]

In case an AP is connected with a plurality of information servers, an electronic device needs to repeat the information exchange operation to obtain information from each information server by repetitively transmitting/receiving as many GAS request/ response frames as the number of information servers.

The above information is presented as background information only to assist with an understanding of the present disclosure. No determination has been made, and no assertion is made, as to whether any of the above might be applicable as prior art with regard to the present disclosure.

### Solution to Problem

Aspects of the present disclosure are to address at least the above-mentioned problems and/or disadvantages and to provide at least the advantages described below. Accordingly, the invention is defined by the appended claims.

Other aspects, advantages, and salient features of the disclosure will become apparent to those skilled in the art from the following detailed description, which, taken in conjunction with the annexed drawings, discloses various embodiments of the present disclosure.

### Advantageous Effects of Invention

As is apparent from the foregoing description, according to an embodiment of the present disclosure, an electronic device may receive information from a plurality of electronic devices connected with an external electronic device through a single information exchange operation before connected with the external electronic device, thus leading to a simplified information exchange operation and power savings.

### Brief Description of Drawings

The above and other aspects, features, and advantages of certain embodiments of the present disclosure will be more apparent from the following description taken in connection with the accompanying drawings, in which:
FIG. 1 is a block diagram illustrating an electronic device according to an embodiment of the present disclosure;
FIG. 2 is a block diagram illustrating an electronic device for controlling information exchange according to an embodiment of the present disclosure;
FIG. 3 is a flowchart illustrating a method for controlling information exchange according to an embodiment of the present disclosure;
FIG. 4 is a flowchart illustrating a method for controlling information exchange according to an embodiment of the present disclosure;
FIG. 5 is a view illustrating an operation of controlling information exchange according to an embodiment of the present disclosure;
FIG. 6 is a view illustrating an operation of controlling information exchange according to an embodiment of the present disclosure;
FIGS. 7a, 7b, and 7c are views illustrating identification information used in an information exchange control operation according to various embodiments of the present disclosure; and
FIG. 8 is a block diagram illustrating an electronic device according to an embodiment of the present disclosure.

Throughout the drawings, like reference numerals will be understood to refer to like parts, components, and structures.

### [Mode for Invention]

The following description with reference to the accompanying drawings is provided to assist in a comprehensive understanding of various embodiments of the present disclosure as defined by the claims. It includes various specific details to assist in that understanding but these are to be regarded as merely exemplary. Accordingly, those of ordinary skill in the art will recognize that various changes and modifications of the various embodiments described herein can be made without departing from the scope of the present disclosure. In addition, descriptions of well-known functions and constructions may be omitted for clarity conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims.

It is to be understood that the singular forms "a," "an," and "the" include plural referents unless the context clearly dictates otherwise. Thus, for example, reference to "a component surface" includes reference to one or more of such surfaces.

The terms "comprise" and/or "comprising" as herein used specify the presence of disclosed functions, operations, or components, but do not preclude the presence or include both A and B.

Ordinal numbers as herein used, such as "first", "second", etc., may modify various components of various embodiments, but do not limit those components. For example, these terms do not limit the order and/or importance of the components. These terms are only used to distinguish one component from another. For example, a first user device and a second user device are different user devices from each other. For example, a first component may be denoted a second component, and vice versa without departing from the scope of the present disclosure.

When a component is "connected to" or "coupled to" another component, the component may be directly connected or coupled to the other component, or other component(s) may intervene therebetween. In contrast, when a component is "directly connected to" or "directly coupled to" another component, no other intervening components may intervene therebetween.

The terms as used herein are provided merely to describe some embodiments thereof, but not to limit the present disclosure.

Unless otherwise defined, all terms including technical and scientific terms used herein have the same meaning as commonly understood by one of ordinary skill in the art to which the embodiments of the present disclosure belong. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

According to an embodiment of the present disclosure, an electronic device as disclosed herein may be a device with a display function. The electronic device may include, but is not limited to, a smartphone, a tablet personal computer (PC), a mobile phone, a video phone, an e-book reader, a desktop PC, a laptop computer, a netbook computer, a personal digital assistant (PDA), a portable multimedia player (PMP), an MP3 player, a mobile medical device, a camera, or a wearable device (e.g., a head-mounted device (HMD), electronic clothes, an electronic bracelet, an electronic necklace, an electronic appcessory, an electronic tattoo, or a smart watch), and the like.

The electronic device may also be a smart home appliance with a display function. An example smart home appliance may include, but is not limited to, a television (TV), a digital versatile disc (DVD) player, an audio player, a refrigerator, an air conditioner, a vacuum cleaner, an oven, a microwave oven, a washer, a drier, an air cleaner, a set-top box, a TV box (e.g., Samsung HomeSyncTM , Apple TVTM, or Google TVTM), a gaming console, an electronic dictionary, a camcorder, or an electronic picture frame.

The electronic device may further include, but is not limited to, various medical devices (e.g., magnetic resource angiography (MRA) device, a magnetic resource imaging (MRI) device, a computed tomography (CT) device, an imaging device, or an ultrasonic device), a navigation device, a global positioning system (GPS) receiver, an event data recorder (EDR), a flight data recorder (FDR), an automotive infotainment device, an sailing electronic device (e.g., a sailing navigation device, a gyroscope, or a compass), avionics, or security devices.

The electronic device may also include, but is not limited to, a part of furniture or building/structure, an electronic board, an electronic signature receiving device, a projector, or various measurement devices (e.g., devices for measuring water, electricity, gas, or electromagnetic waves), each of which includes a display function.

According to an embodiment of the present disclosure, an electronic device as disclosed herein may include an access point (AP) that supports Hotspot (HS) 2.0 or does not support HS 2.0 or a server. The server may include an information server or advertisement server connected with an AP. The information server may provide information on a connection with the AP. The advertisement server may provide advertisement information through the AP. It should be noted that the electronic device may be one or a combination of the above-listed devices, and is not limited to the above-listed devices.

Various embodiments of the present disclosure are now described with reference to the accompanying drawings. As used herein, the term "user" may denote a human or another device using the electronic device (e.g., an artificial intelligent electronic device).

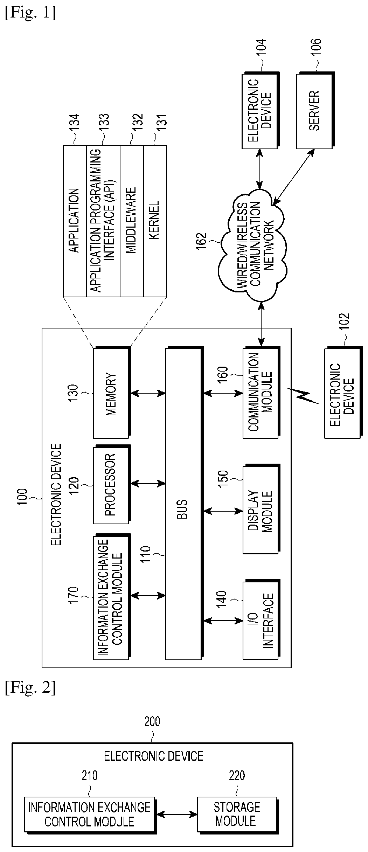

FIG. 1 is a block diagram illustrating an electronic device according to an embodiment of the present disclosure. Referring to FIG. 1, the electronic device 100 may include a bus 110, a processor 120, a memory 130, an input/output interface 140, a display module 150, a communication module 160, and an information exchange control module 170.

The bus 110 connects the other components to each other, and the bus 110 may carry data (e.g., control messages) between the other components.

The processor 120 may receive a command from other components, e.g., the memory 130, the input/output interface 140, the display module 150, or the communication module 160 through the bus 110, interpret the received command, and execute computation or data processing according to the interpreted command.

The memory 130 may store a command or data received from other components, e.g., the input/output interface 140, the display module 150, or the communication module 160 or a command or data generated by the processor 120 or other component. The memory 130 may also retain programming modules including, e.g., a kernel 131, middleware 132, an application programming interface (API) 133, or at least one application 134. The programming modules may be configured in software, firmware, hardware or a combination of two or more thereof.

The kernel 131 may control or manage system resources (e.g., the bus 110, the processor 120, or the memory 130) used to execute the operation or function implemented in the other programming modules, e.g., the middleware 132, the API 133 or the application 134. The kernel 131 may also provide an interface that allows the middleware 132, the API 133, or the application 134 to access the individual components of the electronic device 100 to control or manage the same.

The middleware 132 may function as a relay to allow the API 133 or the application 134 to communicate data with the kernel 131. A plurality of applications 134 may be provided. The middleware 132 may perform load balancing on requests received from the applications 134, e.g., by allocation the priority of using the system resources of the electronic device 100 (e.g., the bus 110, the processor 120, or the memory 130) to at least one of the plurality of applications 134.

The API 133 is an interface allowing the application 134 to control functions provided from the kernel 131 or the middleware 132. For example, the API 133 may include at least one interface or function for filing control, window control, image processing or text control.

The input/output interface 140 may receive commands or data input from, e.g., the user, and transmit the received commands or data to the processor 120 or the memory 130 through the bus 110. The display module 150 may display various types of images, videos, or information (e.g., multimedia data or text data) to the user.

The communication module 160 enables communication between other electronic devices 102 and 104 or between the server 106 and the electronic device 100. The communication module 160 may support various types of wired/wireless communication techniques 162, such as Wi-Fi, Bluetooth (BT), near field communication (NFC) or other short range communication schemes, Internet, local area network (LAN), wide area network (WAN), telecommunication networks, cellular networks, satellite networks, universal serial bus (USB), recommended standard 232 (RS-232), or plain old telephone service (POTS). The electronic devices 102 and 104 each may be the same or different, e.g., in type, from the electronic device 100.

The information exchange control module 170 may easily discover information regarding a plurality of electronic devices connected with an external electronic device before the electronic device connects with the external electronic device. The information exchange control module 170 is described below in connection with FIGS. 2 to 6.

FIG. 2 is a block diagram illustrating an electronic device 200 for controlling information exchange according to an embodiment of the present disclosure. For example, the electronic device 200 may be the electronic device 100 shown in FIG. 1.

Referring to FIG. 2, the electronic device 200 may include an information exchange control module 210 and a storage module 220. According to an embodiment of the present disclosure, the information exchange control module 210 may be the information exchange control module 170 shown in FIG. 1. The information exchange control module 210 may be the processor 120 shown in FIG. 1, and include, e.g., a hardware module, a software module, a firmware module, or a combination of two or more thereof.

The information exchange control module 210 may receive a beacon frame broadcast from an external electronic device before being connected with the external electronic device, and determines whether the beacon frame broadcast from the external electronic device includes identification (ID) information indicating a plurality of electronic devices connected with the external electronic device. When the beacon frame includes the ID information, the information exchange control module 210 may transmit a probe request frame to the external electronic device. When receiving a probe response frame from the external electronic device, the information exchange control module 210 may then determine whether the received probe response frame includes ID information indicating the plurality of electronic devices connected with the external electronic device.

The beacon frame and the probe response frame received from the external electronic device may include the same ID information. For example, in case the external electronic device is an AP connected with a first server and a second server, a unique ID value indicating the type of the first server and the second server may be included as the ID information. The ID information may include a single unique ID value that may indicate the type of the first server and the second server or two unique ID values that respectively may indicate the type of the first server and the type of the second server. For example, in case the external electronic device is a first electronic device connected with a second electronic device and a third electronic device through a short-range communication network (e.g., a Wi-Fi Direct network), the beacon frame may include, as the ID information, a unique ID value indicating the type of the second electronic device and the third electronic device. The ID information may include a single unique ID value that indicates the type of the second electronic device and the third electronic device or two unique ID values that respectively may indicate the type of the second electronic device and the type of the third electronic device.

When the received probe response frame includes ID information indicating a plurality of electronic devices connected with the external electronic device, the information exchange control module 210 may include the ID information (e.g., the unique ID values) received from the external electronic device or indication information indicating data information desired to be received from each of the plurality of electronic devices connected with the external electronic device in a discovery request frame (e.g., a generic advertisement service (GAS) initial Request frame for 801.11u-based communication) for an operation of exchanging information with the plurality of electronic devices connected with the external electronic device. The information exchange control module 210 may store in the discovery request frame the indication information to be distinguished for each of the plurality of electronic devices.

When receiving a discovery response frame (e.g., a GAS initial Response frame for 802.11u-based communication) from the external electronic device after the discovery request frame has been transmitted from the external electronic device, the information exchange control module 210 may detect the data information of each of the plurality of electronic devices from the received discovery response frame. The discovery response frame may include the ID information or the data information of each of the plurality of electronic devices. In an embodiment of the present disclosure, the ID information included in the discovery response frame may be substantially the same as the ID information included in the beacon frame or probe response frame transmitted from the external electronic device or in the discovery request frame transmitted from the electronic device to the external electronic device. For example, in the case the external electronic device is an AP connected with a first server (e.g., an information server) and a second server (e.g., an advertisement server), the electronic device may, through a single information exchange operation, detect data information (e.g., connection information) of the first server from the discovery request frame to attempt a connection with the AP using the detected data information and detect data information (e.g., advertisement information) of the second server to display the detected data information on the display of the electronic device 200. In the case the external electronic device is a first electronic device connected with a second electronic device (e.g., a TV) and a third electronic device (e.g., an audio system), the electronic device 200 may, through a single information exchange operation, detect data information (e.g., TV control information) of the second electronic device from the discovery request frame to attempt a connection with the second electronic device using the detected data information and detect data information (e.g., audio system control information) of the third electronic device to attempt a connection with the third electronic device.

According to an embodiment of the present disclosure, the information exchange control module 210 may be connected with a plurality of electronic devices. For example, in the case the electronic device 200 is an AP, the plurality of electronic devices connected with the electronic device 200 may be a plurality of servers, e.g., a first server (an information server) and a second server (an advertisement server). The electronic device 200 may be connected with the plurality of electronic devices using a short-range communication scheme (e.g., Wi-Fi or BT).

The information exchange control module 210 may broadcast beacon frames each including ID information which indicates the plurality of electronic devices connected with the electronic device 200 while connected with the plurality of electronic devices. When receiving a probe request frame from an external electronic device, the information exchange control module 210 may transmit to the external electronic device a probe response frame including the ID information indicating the plurality of electronic devices connected with the electronic device 200. The information exchange control module 210 may include a discovery request frame (e.g., a GAS initial Request frame for 802.11u-based communication) from the external electronic device. The discovery request frame includes the ID information (e.g., unique ID values) that has been transmitted in the beacon frame or probe response frame by the electronic device 200 or indication information indicating data information desired to be received from each of the plurality of electronic devices connected with the electronic device 200. The information exchange control module 210 may detect the indication information from the discovery request frame and send a request for the data information to each of the plurality of electronic devices connected with the electronic device 200.

When receiving the data information from each of the plurality of electronic devices, the information exchange control module 210 may include in a discovery response frame (e.g., a GAS initial Response frame for 801.11u-based communication) the ID information indicating the plurality of electronic devices connected with the electronic device 200, or the data information received from each of the plurality of electronic devices. The information exchange control module 210 may also transmit the discovery response frame to the external electronic device. The information exchange control module 210 may distinguishably include in the discovery response frame the data information of the plurality of electronic devices.

According to an embodiment of the present disclosure, when receiving the discovery request frame from the external electronic device, the information exchange control module 210 may detect from the discovery request frame the indication information that indicates the data information desired to be received from each of the plurality of electronic devices, and determines whether the storage module 220 includes the data information of each of the plurality of electronic devices. When the storage module 220 includes the data information of each of the plurality of electronic devices, the information exchange control module 210 may include in the discovery response frame the ID information indicating the plurality of electronic devices connected with the electronic device 200 or the data information detected from the storage module 220, and may transmit to the external electronic device the discovery response frame . The information exchange control module 210 may detect a portion of the data information and send a request for another portion of the data information to each of the plurality of electronic devices.

The storage module 220 may be, for example, the memory 130 shown in FIG. 1. According to an embodiment of the present disclosure, the storage module 220 may store information on each of the plurality of electronic devices connected with the electronic device 200.

The information exchange control module 210 may be configured to, when a first frame received from the external electronic device includes the ID information indicating the plurality of electronic devices connected with the external electronic device before being connected with the external electronic device, transmit to the external electronic device a second frame including the indication information that indicates the data information desired to be received from each of the plurality of electronic devices.

When a response frame is received from the external electronic device in response to the second frame includes the ID information, the information exchange control module 210 may be configured to detect from the response frame the ID information that indicates the data information desired to be received from each of the plurality of electronic devices.

The first frame may include a beacon frame or a probe response frame. The second frame, and the response frame received in response to the second frame, may include a data frame by which the data information of each of the plurality of electronic devices connected with the external electronic device may be discovered without a connection between the electronic device and the external electronic device.

According to an embodiment of the present disclosure, the information exchange control module 210 may be further configured to include the ID information received from the external electronic device in the second frame.

The information exchange control module 210 transmits, to the external electronic device, a first frame including ID information indicating a plurality of electronic devices connected with the electronic device before the electronic device is connected with the external electronic device, sends a request for the data information to each of the plurality of electronic devices when receiving a second frame including indication information indicating data information desired to be received from each of the plurality of electronic devices, and transmits a response frame including the data information received from each of the plurality of electronic devices to the external electronic device in response to the second frame.

When the second frame received from the external electronic device includes the ID information, the information exchange control module 210 sends a request for data information to each of the plurality of electronic devices.

When the storage module 220 does not include the data information of each of the plurality of electronic devices, the information exchange control module 210 sends a request for the data information to each of the plurality of electronic devices. When the data information of each of the plurality of electronic devices is included in the storage module 220, the information exchange control module 210 detects the data information from the storage module 220 and includes the detected data information in the response frame in response to the second frame.

According to an embodiment of the present disclosure, the first frame may include a beacon frame or a probe response frame. The second frame and the response frame, responding to the second frame, may include a data frame by which the external electronic device may discover the data information of each of the plurality of electronic devices without a connection between the electronic device and the external electronic device.

In an embodiment of the present disclosure, the information exchange control module 210 may also include the ID information in the response frame in response to the second frame.

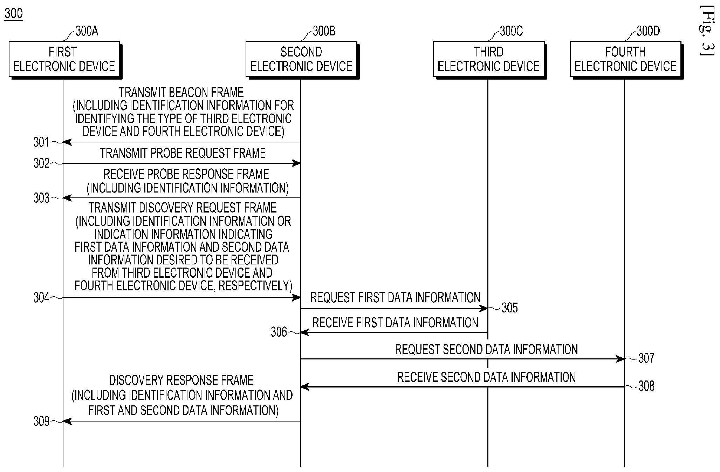

FIG. 3 is an example flowchart illustrating a method for controlling information exchange according to an embodiment of the present disclosure. Referring to FIG. 3, the method 300 includes operations 301 to 309. Each of the first electronic device 300A, the second electronic device 300B, the third electronic device 300C, and the fourth electronic device 300D shown in FIG. 3 may be the electronic device 200 shown in FIG. 2.

At operation 301, the second electronic device 300B, connected with the third electronic device 300C and the fourth electronic device 300D, may broadcast ID information (e.g., unique ID values) for identifying the type of the third electronic device 300C and the fourth electronic device 300D.

The first electronic device 300A receives a beacon frame broadcast from the second electronic device 300B, and identifies the ID information (e.g., the unique ID values that may indicate the type of the third electronic device 300C and the fourth electronic device 300D) included in the beacon frame broadcast from the second electronic device 300B.

At operation 302, the first electronic device 300A then transmits a probe request frame to the second electronic device 300B, and at operation 303, receives a probe response frame from the second electronic device 300B.

The first electronic device 300A may re-identify the ID information (e.g., the unique ID values) that may indicate the type of the third electronic device 300C and the fourth electronic device 300D included in the received probe response frame.

At operation 304, the first electronic device 300A transmits a discovery request frame (e.g., a GAS initial Request frame for 802.11u-based communication), including the ID information received from the second electronic device 300B, or indication information indicating first data information and second data information respectively desired to be received from the third electronic device 300C and the fourth electronic device 300D, to the second electronic device 300B in order to exchange information with the third electronic device 300C and the fourth electronic device 300D.

The second electronic device 300B may detect the indication information indicating the first data information and the second data information in the received discovery request frame.

At operation 305, the second electronic device 300B may transmit the indication information indicating the first data information to the third electronic device 300C, and at operation 306, receives the first data information from the third electronic device 300C.

At operation 307, the second electronic device 300B may transmit the indication information indicating the second data information to the fourth electronic device 300D, and at operation 308, receives the second data information from the fourth electronic device 300D. It should be noted that operations 305 through 308 may be performed substantially at the same time.

At operation 309, the second electronic device 300B transmits a discovery response frame, including the ID information, the first data information received from the third electronic device 300C, and the second data information received from the fourth electronic device 300D, to the first electronic device 300A.

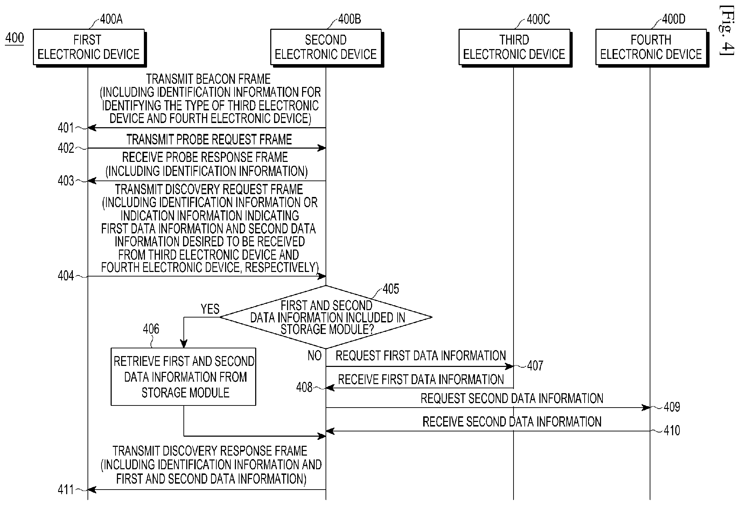

FIG. 4 is an example flowchart illustrating a method for controlling information exchange according to an embodiment of the present disclosure. Referring to FIG. 4, the method 400 includes operations 401 to 411. Each of the first electronic device 400A, the second electronic device 400B, the third electronic device 400C, and the fourth electronic device 400D shown in FIG. 4 may be the electronic device 200 shown in FIG. 2.

At operation 401, the second electronic device 400B, connected with the third electronic device 400C and the fourth electronic device 400D, may broadcast ID information (e.g., unique ID values) for identifying the type of the third electronic device 400C and the fourth electronic device 400D.

The first electronic device 400A receives the beacon frame broadcast from the second electronic device 400B and identifies the ID information included in the beacon frame.

At operation 402, the first electronic device 400A transmits a probe request frame to the second electronic device 400B, and at operation 403, receives a probe response frame from the second electronic device 400B. The first electronic device 400A may then re-identify the ID information included in the received probe response frame.

At operation 404, the first electronic device 400A transmits a discovery request frame (e.g., a GAS initial Request frame for 802.11u-based communication), including the ID information received from the second electronic device 400B, or indication information indicating first data information and second data information desired to be received from the third electronic device 400C and the fourth electronic device 400D, respectively, to the second electronic device 400B in order to exchange information with the third electronic device 400C and the fourth electronic device 400D.

The second electronic device 400B then detects the indication information indicating the first data information and the second data information from the received discovery request frame.

At operation 405, the second electronic device 400B determines whether the storage module of the second electronic device 400B includes the first data information and the second data information. If the second electronic device 400B determines at operation 405 that the storage module includes the first data information and the second data information, the first data information and the second data information stored in the storage module of the second electronic device 400B is retrieved at operation 406.

At operation 411, the second electronic device 400B transmits a discovery response frame, including the ID information, the first data information and/or the second data information retrieved from the storage module , to the first electronic device 400A.

If the second electronic device 400B determines at operation 405 that the storage module of the second electronic device 400B does not include the first data information and the second data information, the second electronic device 400B sends a request for the first data information to the third electronic device 400C at operation 407, and receives the first data information from the third electronic device 400C at operation 408.

At operation 409, the second electronic device 400B sends a request for the second data information to the fourth electronic device 400D, and at operation 410, receives the second data information from the fourth electronic device 400D. Although operations 407 through 410 are shown as separate operations, operations 407 through 410 may be performed substantially at the same time.

At operation 411, the second electronic device 400B transmits a discovery response frame, including the ID information, the first data information received from the third electronic device 400C, and/or the second data information received from the fourth electronic device 400D, to the first electronic device 400A.

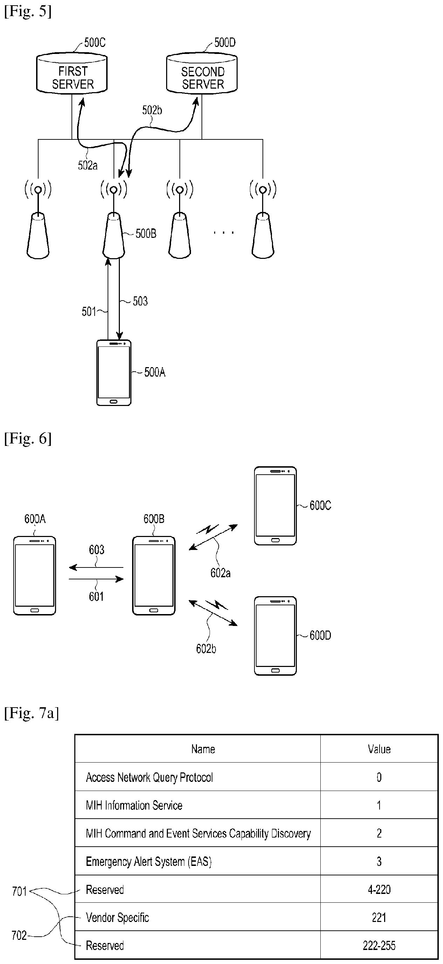

FIG. 5 is an example view illustrating an operation of controlling information exchange according to an embodiment of the present disclosure. In FIG. 5 an electronic device 500A exchanges information with an AP 500B connected with a first server 500C and a second server 500D. Each of the electronic devices 500A, the AP 500B, the first server 500C, and the second server 500D shown in FIG. 5 may be the electronic device 200 shown in FIG. 2.

In the example, the AP 500B may broadcast a beacon frame including ID information (e.g., unique ID values) for identifying the first server 500C (e.g., an information server) and the second server 500D (e.g., an advertisement server) connected to the AP 500B.

Upon receiving the beacon frame broadcast from the AP 500B, the electronic device 500A may transmit a probe request frame to the AP 500B. The AP 500B may then transmit, to the electronic device 500A a probe response frame including the ID information for identifying the first server 500C (e.g., an information server) and the second server 500D (e.g., an advertisement server).

The electronic device 500A may then identify the type of the first server 500C and the second server 500D connected with the AP 500B using the ID information included in the received probe response frame.

At operation 501, the electronic device 500A may then transmit a discovery request frame, including the ID information received from the AP 500B or indication information indicating first data information (e.g., information regarding connection with the AP 500B) desired to be received from the first server 500C, and second data information (e.g., advertisement information) desired to be received from the second server 500D, to the AP 500B.

The AP 500B may then detect the indication information in the second server 500D from the received discovery request frame. At operation 502a, the AP 500B sends a request for the first data information to the first server 500C and receives the first data information from the first server 500C. At operation 502B, the AP 500B may send a request for the second data information to the second server 500D and receive the second data information from the second server 500D.

At operation 503, the AP 500B transmits, to the electronic device 500A, a probe response frame , including the ID information , the first data information received from the first server 500C and the second data information received from the second server 500D.

The electronic device 500A may then attempt a connection with the AP 500B using the first data information (e.g., the information regarding connection with the AP 500B) detected in the discovery response frame received from the AP 500B. The electronic device 500A may also display the second data information (e.g., the advertisement information) detected in the discovery response frame received from the AP 500B.

FIG. 6 is an example view illustrating an operation of controlling information exchange according to an embodiment of the present disclosure. In the example, a first electronic device 600A exchanges information with a second electronic device 600B connected with a third electronic device 600C and a fourth electronic device 600D. Each of the first electronic device 600A, the second electronic device 600B, the third electronic device 600C, and the fourth electronic device 600D shown in FIG. 6 may be the electronic device 200 shown in FIG. 2.

The second electronic device 600B may be connected with the third electronic device 600C and the fourth electronic device 600D via short-range communication, e.g., a Wi-Fi Direct communication. In the example shown, the second electronic device 600B functions as a group owner (GO), and the third electronic device 600C and the fourth electronic device 600D each function as a group client (GC). While the second electronic device 600B remains connected with the third electronic device 600C and the fourth electronic device 600D via Wi-Fi Direct communication, the second electronic device 600B may receive and store basic information (e.g., the respective IDs of the third electronic device 600C and the fourth electronic device 600D).

The second electronic device 600B may broadcast a beacon frame including ID information indicating the third electronic device 600C and the fourth electronic device 600D connected with the second electronic device 600B.

Upon receiving the beacon frame broadcast from the second electronic device 600B, the first electronic device 600A may transmit a probe request frame to the second electronic device 600B. When the second electronic device 600B receives the probe request frame from the first electronic device 600A, the second electronic device 600B may transmit, to the first electronic device 600A, a probe response frame including the ID information (e.g., unique ID values) for identifying the third electronic device 600C and the fourth electronic device 600D connected with the second electronic device 600B.

The first electronic device 600A receives the probe response frame and may identify the type of the third electronic device 600C and the fourth electronic device 600D using the ID information included in the probe response frame.

At operation 601, the first electronic device 600A transmits a discovery request frame (e.g., a GAS initial Request frame for 802.11u-based communication), including the ID information received from the second electronic device 600B or indication information indicating first data information desired to be received from the third electronic device 600C and second data information desired to be received from the fourth electronic device 600D, to the second electronic device 600B.

The second electronic device 600B may then detect the indication information indicating the first data information and the second data information desired to be received from the third electronic device 600C and the fourth electronic device 600D, respectively, from the received discovery request frame.

When the storage module of the second electronic device 600B includes the basic information of the third electronic device 600C and the fourth electronic device 600D (e.g., the first data information of the third electronic device 600C functioning as a GC and the second data information of the fourth electronic device 600D functioning as a GC), the second electronic device 600B may retrieve the first data information and/or the second data information from the storage module.

When the storage module of the second electronic device 600B does not include the whole, or at least part of, the first data information or the second data information, the second electronic device 600B may send a request for the first data information to the third electronic device 600C, and receive the first data information from the third electronic device 600C at operation 602a. The second electronic device 600B may also send a request for the second data information to the fourth electronic device 600D and receive the second data information from the fourth electronic device 600D at operation 602b.

At operation 603, the second electronic device 600B may transmit, to the first electronic device 600A, a probe response frame including the ID information and the first data information received from the third electronic device 600C and the second data information received from the fourth electronic device 600D.

The first electronic device 600A may receive the probe response frame and detect the first data information of the third electronic device 600C and the second data information of the fourth electronic device 600D. The first electronic device 600A may identify the first data information and the second data information. The first electronic device 600A may then be connected with the third electronic device 600C or the fourth electronic device 600D via the Wi-Fi Direct communication link between the first electronic device 600A and the second electronic device 600B.

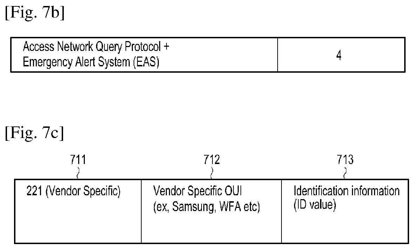

FIGS. 7a, 7b, and 7c are example views illustrating ID information used in an information exchange control operation according to various embodiments of the present disclosure.

FIG. 7a shows the name of each field indicating the type of a service and the value of each field.

"Reserved" field 701 denotes an unused extra field. Referring to FIG. 7b, a reserved field may be configured with a combination of other service types, (Access Network Query Protocol+EAS) as its name, and "4" as its value, so as to designate a type of ID information. For example, various types of ID information may be designated by combining a reserved field whose value is 4 with the ID of each of a plurality of electronic devices connected with an external electronic device.

Referring back to FIG. 7a, the "Vendor Specific" field 702 whose value is 221 stores place information. The "Vendor Specific" field 702 may add detailed place information. For example, referring to FIG. 7c, in this example the "Vendor Specific" field has a value '221' 711 indicating that the field stores place information followed by information 712 indicating a specific group (Vendor Specific OUT), and an ID information value 713 that may be added next to the information 712. The ID information may also include a combination of the respective IDs of the plurality of electronic devices connected with the external electronic device.

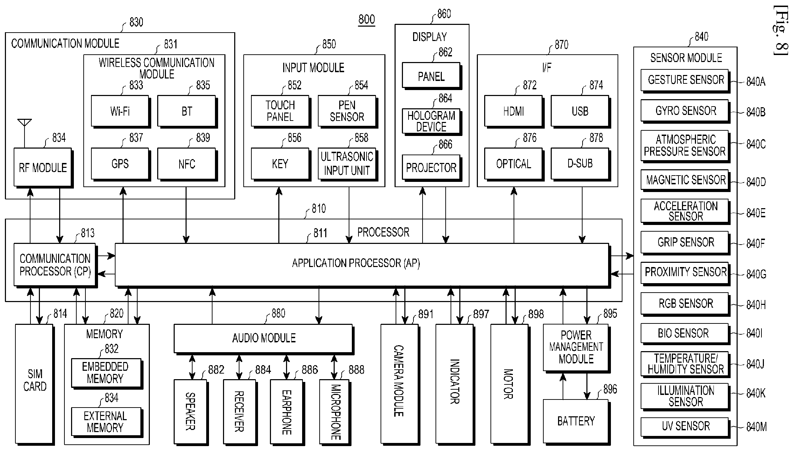

FIG. 8 is a block diagram illustrating an electronic device 800 according to an embodiment of the present disclosure. The electronic device 800 may include a whole or part of the configuration of the electronic device 100 shown in FIG. 1.

Referring to FIG. 8, the electronic device 800 may include one or more processors 810, a subscriber identification module (SIM) card 814, a memory 820, a communication module 830, a sensor module 840, an input module 850, a display 860, an interface 870, an audio module 880, a camera module 891, a power management module 895, a battery 896, an indicator 897, and/or a motor 898.

The processor 810 may include one or more application processors (APs) 811 and/or one or more communication processors (CPs) 813. The processor 810 may be, for example, the processor 120 shown in FIG. 1. Although FIG. 8 illustrates an example where the AP 811 and the CP 813 are included in the processor 810, the AP 811 and the CP 813 may be included in different integrated circuit (IC) packages, respectively or in a single IC package.

The AP 811 may control multiple hardware and software components connected to the AP 811 by running an operating system or application programs, and process or compute various data including multimedia data. The AP 811 may be implemented in a System on Chip (SoC), for example. According to an embodiment of the present disclosure, the AP 810 may further include a graphic processing unit (GPU) (not shown).

The CP 813 may manage a data link in communication between the electronic device 800 and other electronic devices connected with the electronic device 800 through a network, and perform conversion on a communication protocol. The CP 813 may further perform at least some multimedia control functions, identify and authenticate the electronic device 800 in a communication network using, for example, a SIM (e.g., the SIM card 814). The CP 813 may further control data communication of the communication module 830 and provide the user with voice call, video call, text message, or packet data services. According to an embodiment of the present disclosure, the CP 813 may be implemented in, e.g., an SoC.

Although FIG. 8 illustrates an example where the CP 813, the power management module 895, and the memory 820 are provided separately from the AP 811, the AP 811 may be implemented to include at least some (e.g., the CP 813) of the components.

The AP 811 or the CP 813 may load and process, on a non-volatile memory, commands or data received from a non-volatile memory or other component connected thereto and store, in the non-volatile memory, data received from other component(s) or data generated by the other component(s).

The SIM card 814 may include a SIM, and be inserted into a slot formed at a predetermined position of the electronic device 800. The SIM card 814 may contain unique identification information (e.g., an IC card identifier (ICCID) or subscriber information (e.g., an international mobile subscriber identity (IMSI)).

The memory 820 may include an internal/embedded memory 832 or an external memory 834. The memory 820 may be, e.g., the memory 130 shown in FIG. 1. The internal memory 832 may also include a volatile memory e.g., a dynamic random access memory (DRAM), a static random access memory (SRAM), a synchronous dynamic random access memory (SDRAM), etc.) or a non-volatile memory (e.g., a one-time programmable read-only memory (OTPROM), a programmable read-only memory (PROM), an erasable and programmable read-only memory (EPROM), an electrically erasable and programmable read-only memory (EEPROM), a mask read-only memory (ROM), a flash read-only memory (ROM), a NAND flash memory, or a NOR flash memory. According to an embodiment of the present disclosure, the internal memory 822 may be a solid state drive (SSD).

The external memory 834 may include a flash drive, e.g., a compact flash (CF) memory, a secure digital (SD) memory, a micro-SD memory, a mini-SD memory, an extreme digital (xD) memory, or a memory stickTM, and may be functionally connected with the electronic device 800 via various interfaces.

According to an embodiment of the present disclosure, although not shown in the drawings, the electronic device 800 may further include a storage device (or storage medium) such as a hard disk drive.

The communication module 830 may include a wireless communication module 831 and a radio frequency (RF) module 834. In accordance with an embodiment of the present disclosure, the communication module 830 may be included in, e.g., the communication module 160 shown in FIG. 1. The wireless communication module 831 may include, e.g., a wireless fidelity (Wi-Fi) module 833, a Bluetooth (BT) module 835, a global positioning system (GPS) module 837, or a near-field communication (NFC) module 839. The wireless communication module 831 may offer wireless communication functions using wireless frequencies.

Alternatively, the wireless communication module 831 may include a network interface (e.g., a local area network (LAN) card) or model to connect the electronic device 800 with a network (e.g., the Internet, a local area network (LAN), a wide area network (WAN), a telecommunication network, a cellular network, a satellite network, or a plain old telephone service (POTS)).

The RF module 834 may process communication of voice or data signals, and may include a transceiver, a power amplifier module (PAM), a frequency filter, or a low noise amplifier (LNA) (not shown). The RF module 834 may further include parts (e.g., conductors or wires) for communicating radio waves in a free space upon performing wireless communication.

According to an embodiment of the present disclosure, the electronic device 800 may receive the user's input from an external electronic device (e.g., a network, computer, or server) connected with the electronic device 800 using the communication module 830.

The sensor module 840 may include, e.g., a gesture sensor 840A, a gyro sensor 840B, an atmospheric pressure sensor 840C, a magnetic sensor 840D, an acceleration sensor 840E, a grip sensor 840F, a proximity sensor 840G, an Red-Green-Blue (RGB) sensor 840H, a bio sensor 840I, a temperature/humidity sensor 840J, an illumination sensor 840K, an Ultra Violet (UV) sensor 840M, or an infrared (IR) sensor (not shown). The sensor module 840 may measure a physical quantity or detect an operational stage of the electronic device, and convert the measured or detected information into an electrical signal. Additionally, the sensor module 840 may include an E-nose sensor, an electromyography (EMG) sensor, an electroencephalogram (EEG) sensor, an electrocardiogram (ECG) sensor, or a finger print sensor. The sensor module 840 may further include a control circuit for controlling at least one or more of the sensors included in the sensor module 840.

The input module 850 may be included in, e.g., the input/output interface 140 shown in FIG. 1, for example. The input module 850 may include a touch panel 852, a (digital) pen sensor 854, a key 856, or an ultrasonic input unit 858. The touch panel 852 may recognize touch inputs by at least one of capacitive, resistive, IR, or ultrasonic methods. The touch panel 852 may further include a control circuit (not shown). The touch panel 852, adopting the capacitive method, may detect a physical contact or perform proximity recognition. Alternatively, the touch panel 852 may further include a tactile layer, wherein the user is provided with a tactile response.

The (digital) pen sensor 854 may be implemented in a way identical or similar to how a touch input of a user is received, or by using a separate sheet for recognition. The key 856 may include a physical button, an optical key, a keypad, or a touch key. The ultrasonic input unit 858 may use an input tool that generates an ultrasonic signal to enable the electronic device 800 to determine data by sensing the ultrasonic signal through, e.g., the microphone 888, thereby enabling wireless recognition.

The display 860 may include a panel 862, a hologram device 864, and a projector 866. The display 860 may be, e.g., the display module 150 shown in FIG. 1. The panel 862 may be, e.g., a Liquid Crystal Display (LCD), Active Matrix Organic Light Emitting Diodes (AMOLEDs), or the like. The panel 862 may be implemented to be flexible, transparent, or wearable. The panel 862 may also be incorporated with the touch panel 852 in a module. The hologram device 864 may make three dimensional (3D) images (holograms) in the air by using light interference. The projector 866 may display images on an external screen through light projection. In accordance with an embodiment of the present disclosure, the display 860 may further include a control circuit to control the panel 862, the hologram device 864, and/or the projector 866.

The interface 870 may include e.g., a High Definition Multimedia Interface (HDMI) 872, a USB 874, an optical interface 876, and a D-subminiature (D-sub) 878. The communication module 830 may be included in the communication module 160 shown in FIG. 1. Alternatively, the interface 870 may include, e.g., an SD interface (not shown), a multi-media card (MMC) (not shown), or an infrared data association (IrDA) interface (not shown).

The audio module 880 may convert a sound signal into an electrical signal and vice versa. The audio module 880 may be included in, e.g., the input/output interface 140 shown in FIG. 1. The audio module 880 may process sound information input or output through e.g., a speaker 882, a receiver 884, an earphone 886, and/or a microphone 888.

The camera module 891 may be a device for capturing still images and videos, and may include, according to an embodiment of the present disclosure, one or more image sensors (e.g., front and back sensors) (not shown), a lens (not shown), an Image Signal Processor (ISP) (not shown), or a flash such as an LED or xenon lamp (not shown).

The power manager module 895 may manage power of the electronic device 800. Although not shown, e.g., a power management IC (PMIC), a charger IC, or a battery or fuel gauge may be included in the power manager module 895.

The PMIC may be mounted on an IC or an SoC. A charging method may be divided into wired and wireless charging methods. The charger IC may charge a battery and prevent overvoltage or overcurrent from being induced from a charger. According to an embodiment of the present disclosure, the charger IC may be used in at least one of a cable charging scheme and a wireless charging scheme. The wireless charging scheme may include e.g., a magnetic resonance scheme, a magnetic induction scheme, or an electromagnetic wave based scheme, and an additional circuit, such as a coil loop, a resonance circuit, a rectifier, or the like may be added for wireless charging.

The battery gauge may measure an amount of remaining power of the battery 896, a voltage, a current, or a temperature while the battery 896 is being charged. The battery 896 may supply recharged electricity to the electronic device 800 and may include a rechargeable battery or a solar battery, for example.

The indicator 897 may indicate a particular state of the electronic device 800 or a part of the electronic device (e.g., the AP 811), including e.g., a booting state, a message state, or recharging state. The motor 898 may convert an electric signal to a mechanical vibration.

Although not shown, a processing unit (e.g., a GPU) for supporting a mobile TV may be included in the electronic device 800. The processing unit for supporting mobile TV may process media data conforming to a standard for Digital Multimedia Broadcasting (DMB), Digital Video Broadcasting (DVB), or media flow.

Each of the aforementioned components of the electronic device may include one or more parts, and a name of the part may vary with a type of the electronic device. The electronic device in accordance with various embodiments of the present disclosure may include at least one of the aforementioned components, omit some of them, or include other additional component(s). Some of the components may be combined into an entity, but the entity may perform the same functions as the components may do.

The term 'module' may refer to a unit including one of hardware, software, and firmware, or a combination thereof. The term 'module' may be interchangeably used with a unit, logic, logical block, component, or circuit. The module may be a minimum unit or part of an integrated component. The module may be a minimum unit or part of performing one or more functions. The module may be implemented mechanically or electronically. For example, the module may include at least one of Application Specific Integrated Circuit (ASIC) chips, Field Programmable Gate Arrays (FPGAs), or Programmable Logic Arrays (PLAs) that perform some operations, which have already been known or will be developed in the future.

According to an embodiment of the present disclosure, an electronic device may receive and store a program including commands that allow the electronic device to perform a discovery control method from a program providing device, wired or wirelessly, connected with the electronic device. The electronic device or server shown in FIG. 1 may be the program providing device. The program providing device may include a memory for storing the program, a communication module for performing wired or wireless communication with the electronic device, and a processor that may transmit the program to the electronic device automatically or in response to a request 22 from the electronic device.

While the present disclosure has been shown and described with reference to various embodiments thereof, it will be understood by those skilled in the art that various changes in form and details may be made therein without departing from the scope of the present disclosure as defined by the appended claims.

## Claims

1. An electronic device (300A) comprising:
a memory (130); and
a processor (120) configured to:
receive a first frame (301) from an access point, AP, supporting Hotspot 2.0 (300B) before being connected to the AP (300B),
if the first frame (301) received from the AP (300B) includes identification information indicating a plurality of servers (300C, 300D) that are connected to the AP (300B), transmit, to the AP (300B), a generic advertisement service, GAS, Request frame (304) including a request for each of data information desired to be received from each of the plurality of servers (300C, 300D) by the electronic device (300A) in response to the first frame, and
receive a response frame responding to the GAS Request frame from the AP (300B), the response frame including the data information received from each of the plurality of servers (300C, 300D).

2. The electronic device of claim 1, wherein the processor (120) is further configured to obtain the data information desired to be received from each of the plurality of servers (300C, 300D), from the response frame received from the AP (300B) in response to the GAS Request frame, when the response frame includes the identification information.

3. The electronic device (300A) of claim 1,
wherein the first frame includes at least one of a beacon frame or a probe response frame, and
wherein the GAS Request frame and the response frame include a frame by which the data information of each of the plurality of servers (300C, 300D) connected to the AP (300B) may be discovered without a connection with the AP (300B).

4. An access point, AP, supporting Hotspot 2.0 (300B) comprising:
a transceiver; and
a processor configured to:
transmit (301), to an electronic device (300A), a first frame including identification information indicating a plurality of servers (300C, 300D) that are connected to the AP (300B) before being connected with the electronic device (300A),
receive (304) a generic advertisement service, GAS, Request frame including a request for each of data information desired to be received from each of the plurality of servers (300C, 300D), from the electronic device (300A),
transmit (305, 307) respective requests to transmit the data information to each of the plurality of servers (300C, 300D) in response to the GAS Request frame, and
transmit (309), to the electronic device (300A), a response frame responding to the GAS Request frame, the response frame including the data information received from each of the plurality of servers (300C, 300D).

5. The AP of claim 4, wherein the processor is configured to request each of the plurality of servers (300C, 300D) to transmit the data information, when the GAS Request frame received from the electronic device (300A) includes the identification information.

6. The AP (300B) of claim 4, wherein the processor is configured to:
determine if a storage module includes the data information desired to be received from each of the plurality of servers (300C, 300D),
request each of the plurality of servers (300C, 300D) to transmit the data information when the storage module does not include the data information.
obtain the data information from the storage module when the storage module includes the data information.

7. The AP (300B) of claim 4, wherein the first frame includes at least one of a beacon frame or a probe response frame, and wherein the GAS Request frame and the response frame responding to the GAS Request frame include a frame by which the data information of each of the plurality of servers (300C, 300D) connected to the AP (300B) may be discovered without a connection with the electronic device (300A).

8. A method for controlling information exchange by an electronic device (300A), the method comprising:
receiving (301), by the electronic device (300A), a first frame from an access point, AP, supporting Hotspot 2.0 (300B) before being connected with the AP (300B);
transmitting (304), by the electronic device (300A), to the AP (300B), a generic advertisement service, GAS, Request frame including a request for each of data information desired to be received from each of a plurality of servers (300C, 300D) in response to the first frame, if the first frame includes the identification information indicating the plurality of servers (300C, 300D) that are connected to the AP (300B); and
receiving a response frame responding to the GAS Request frame from the AP (300B), the response frame including the data information received from each of the plurality of servers (300C, 300D).

9. The method of claim 8, further comprising
obtaining the data information desired to be received from each of the plurality of servers (300C, 300D) from the response frame responding to the GAS Request frame, if the response frame includes the identification information.

10. The method of claim 8, wherein the first frame includes at least one of a beacon frame or a probe response frame, and wherein the GAS Request frame and the response frame include a frame by which the data information of each of the plurality of servers (300C, 300D) connected to the AP (300B) may be discovered without a connection with the AP (300B).

11. A method for controlling discovery by an access point, AP, supporting Hotspot 2.0 (300B), the method comprising:
transmitting (301), to an electronic device (300A), a first frame including identification information indicating a plurality of servers (300C, 300D) that are connected to the AP (300B) before being connected with the AP (300B);
receiving (304) a generic advertisement service, GAS, Request frame including a request for each of data information desired to be received from each of the plurality of servers (300C, 300D), from the electronic device (300A);
requesting (305, 307) each of the plurality of servers (300C, 300D) to transmit the data information; and
transmitting (309), to the electronic device (300A), a response frame including the data information received from each of the plurality of servers (300C, 300D), in response to the GAS Request frame.

12. The method of claim 11, wherein the requesting includes requesting each of the plurality of servers (300C, 300D) to transmit the data information, if the GAS Request frame received from the electronic device (300A) includes the identification information.

13. The method of claim 11, wherein the requesting includes requesting each of the plurality of servers (300C, 300D) to transmit the data information if a storage module does not include the data information desired to be received from each of the plurality of servers (300C, 300D).

14. The method of claim 11, further comprising:
if a storage module includes the data information desired to be received from each of the plurality of servers,
obtaining the data information from the storage module.

15. The method of claim 11,
wherein the first frame includes at least one of a beacon frame or a probe response frame, and
wherein the GAS Request frame and the response frame include a frame by which the data information of each of the plurality of servers (300C, 300D) connected to the AP (300B) may be discovered without a connection with the electronic device (300A).

## Patentansprüche

1. Elektronische Vorrichtung (300A), welche Folgendes umfasst:
einen Speicher (130); und
einen Prozessor (120), der konfiguriert ist zum:
Empfangen eines ersten Rahmens (301) von einem Zugangspunkt, AP, der Hotspot 2.0 (300B) unterstützt, bevor er mit dem AP (300B) verbunden wird,
wenn der erste Rahmen (301), der von dem AP (300B) empfangen wird, Identifizierungsinformationen enthält, die mehrere Server (300C, 300D) anzeigen, die mit dem AP (300B) verbunden sind, Übertragen an den AP (300B) eines generischen Anzeigedienst(GAS)-Anforderungsrahmens (304), der eine Anforderung für jede der Dateninformationen enthält, die von jedem der mehreren Server (300C, 300D) empfangen werden sollen, durch die elektronische Vorrichtung (300A) als Antwort auf den ersten Rahmen, und
Empfangen eines Antwortrahmens, der auf den GAS-Anforderungsrahmen antwortet, von dem AP (300B), wobei der Antwortrahmen die Dateninformationen enthält, die von jedem der mehreren Server (300C, 300D) empfangen werden.

2. Elektronische Vorrichtung nach Anspruch 1, wobei der Prozessor (120) ferner konfiguriert ist, um die Dateninformationen, die von jedem der mehreren Server (300C, 300D) empfangen werden sollen, von dem Antwortrahmen zu erhalten, der von dem AP (300B) als Antwort auf den GAS-Anforderungsrahmen empfangen wird, wenn der Antwortrahmen die Identifizierungsinformationen enthält.

3. Elektronische Vorrichtung (300A) nach Anspruch 1,
wobei der erste Rahmen einen Bakenrahmen und/oder einen Sondenantwortrahmen enthält, und
wobei der GAS-Anforderungsrahmen und der Antwortrahmen einen Rahmen enthalten, durch den die Dateninformationen von jedem der mehreren Server (300C, 300D), die mit dem AP (300B) verbunden sind, ohne eine Verbindung mit dem AP (300B) entdeckt werden können.

4. Zugangspunkt, AP, der Hotspot 2.0 (300B) unterstützt, der Folgendes umfasst:
einen Transceiver; und
einen Prozessor, der konfiguriert ist zum:
Übertragen (301) eines ersten Rahmens an eine elektronische Vorrichtung (300A), der Identifizierungsinformationen enthält, die mehrere Server (300C, 300D) anzeigen, die mit dem AP (300B) verbunden sind, bevor sie mit der elektronischen Vorrichtung (300A) verbunden werden,
Empfangen (304) eines generischen Anzeigedienst(GAS)-Anforderungsrahmens, der eine Anforderung für jede der Dateninformationen enthält, die von jedem der mehreren Server (300C, 300D) empfangen werden sollen, von der elektronischen Vorrichtung (300A),
Übertragen (305, 307) betreffender Anforderungen zum Übertragen der Dateninformationen an jeden der mehreren Server (300C, 300D) als Antwort auf den GAS-Anforderungsrahmen, und
Übertragen (309) eines Antwortrahmens an die elektronische Vorrichtung (300A), der auf den GAS-Anforderungsrahmen antwortet, wobei der Antwortrahmen die Dateninformationen enthält, die von jedem der mehreren Server (300C, 300D) empfangen werden.

5. AP nach Anspruch 4, wobei der Prozessor konfiguriert ist, um jeden der mehreren Server (300C, 300D) aufzufordern, die Dateninformationen zu übertragen, wenn der GAS-Anforderungsrahmen, der von der elektronischen Vorrichtung (300A) empfangen wird, die Identifizierungsinformationen enthält.

6. AP (300B) nach Anspruch 4, wobei der Prozessor konfiguriert ist zum:
Bestimmen, ob ein Speichermodul die Dateninformationen enthält, die von jedem der mehreren Server (300C, 300D) empfangen werden sollen,
Anfordern von jedem der mehreren Server (300C, 300D), die Dateninformationen zu übertragen, wenn das Speichermodul nicht die Dateninformationen enthält.
Erhalten der Dateninformationen von dem Speichermodul, wenn das Speichermodul die Dateninformationen enthält.

7. AP (300B) nach Anspruch 4, wobei der erste Rahmen einen Bakenrahmen und/oder einen Sondenantwortrahmen enthält und wobei der GAS-Anforderungsrahmen und der Antwortrahmen, der auf den GAS-Anforderungsrahmen antwortet, einen Rahmen enthalten, durch den die Dateninformationen von jedem der mehreren Server (300C, 300D), die mit dem AP (300B) verbunden sind, ohne eine Verbindung mit der elektronischen Vorrichtung (300A) entdeckt werden können.

8. Verfahren zum Steuern von Informationsaustausch durch eine elektronische Vorrichtung (300A), wobei das Verfahren Folgendes umfasst:
Empfangen (301) eines ersten Rahmens durch die elektronische Vorrichtung (300A) von einem Zugangspunkt, AP, der Hotspot 2.0 (300B) unterstützt, bevor er mit dem AP (300B) verbunden wird;
Übertragen (304) durch die elektronische Vorrichtung (300A) an den AP (300B) eines generischen Anzeigedienst(GAS)-Anforderungsrahmens, der eine Anforderung für jede der Dateninformationen enthält, die von jedem der mehreren Server (300C, 300D) empfangen werden sollen, als Antwort auf den ersten Rahmen, wenn der erste Rahmen die Identifizierungsinformationen enthält, die die mehreren Server (300C, 300D) anzeigen, die mit dem AP (300B) verbunden sind; und
Empfangen eines Antwortrahmens, der auf den GAS-Anforderungsrahmen antwortet, von dem AP (300B), wobei der Antwortrahmen die Dateninformationen enthält, die von jedem der mehreren Server (300C, 300D) empfangen werden.

9. Verfahren nach Anspruch 8, welches ferner Folgendes umfasst
Erhalten der Dateninformationen, die von jedem der mehreren Server (300C, 300D) empfangen werden sollen, von dem Antwortrahmen, der auf den GAS-Anforderungsrahmen antwortet, wenn der Antwortrahmen die Identifizierungsinformationen enthält.

10. Verfahren nach Anspruch 8, wobei der erste Rahmen einen Bakenrahmen und/oder einen Sondenantwortrahmen enthält und wobei der GAS-Anforderungsrahmen und der Antwortrahmen einen Rahmen enthalten, durch den die Dateninformationen von jedem der mehreren Server (300C, 300D), die mit dem AP (300B) verbunden sind, ohne eine Verbindung mit dem AP (300B) entdeckt werden können.

11. Verfahren zum Steuern der Erkennung durch einen Zugangspunkt, AP, der Hotspot 2.0 (300B) unterstützt, wobei das Verfahren Folgendes umfasst:
Übertragen (301) eines ersten Rahmens an eine elektronische Vorrichtung (300A), der Identifizierungsinformationen enthält, die mehrere Server (300C, 300D) anzeigen, die mit dem AP (300B) verbunden sind, bevor mit dem AP (300B) verbunden wird;
Empfangen (304) eines generischen Anzeigedienst(GAS)-Anforderungsrahmens, der eine Anforderung für jede der Dateninformationen enthält, die von jedem der mehreren Server (300C, 300D) empfangen werden sollen, von der elektronischen Vorrichtung (300A);
Anfordern (305, 307) von jedem der mehreren Server (300C, 300D), die Dateninformationen zu übertragen; und
Übertragen (309) eines Antwortrahmens an die elektronische Vorrichtung (300A), der die Dateninformationen enthält, die von jedem der mehreren Server (300C, 300D) empfangen werden, als Antwort auf den GAS-Anforderungsrahmen.

12. Verfahren nach Anspruch 11, wobei das Anfordern einschließt, jeden der mehreren Server (300C, 300D) aufzufordern, die Dateninformationen zu übertragen, wenn der GAS-Anforderungsrahmen, der von der elektronischen Vorrichtung (300A) empfangen wird, die Identifizierungsinformationen enthält.

13. Verfahren nach Anspruch 11, wobei das Anfordern einschließt, jeden der mehreren Server (300C, 300D) aufzufordern, die Dateninformationen zu übertragen, wenn ein Speichermodul nicht die Dateninformationen enthält, die von jedem der mehreren Server (300C, 300D) empfangen werden sollen.

14. Verfahren nach Anspruch 11, welches ferner Folgendes umfasst:
wenn ein Speichermodul die Dateninformationen enthält, die von jedem der mehreren Server empfangen werden sollen,
Erhalten der Dateninformationen von dem Speichermodul.

15. Verfahren nach Anspruch 11,
wobei der erste Rahmen einen Bakenrahmen und/oder einen Sondenantwortrahmen enthält, und
wobei der GAS-Anforderungsrahmen und der Antwortrahmen einen Rahmen enthalten, durch den die Dateninformationen von jedem der mehreren Server (300C, 300D), die mit dem AP (300B) verbunden sind, ohne eine Verbindung mit der elektronischen Vorrichtung (300A) entdeckt werden können.

## Revendications

1. Dispositif électronique (300A) comprenant :
une mémoire (130) ; et
un processeur (120) configuré pour :
recevoir une première trame (301) d'un point d'accès, AP, prenant en charge Hotspot 2.0 (300B) avant de se connecter à l'AP (300B),
si la première trame (301) reçue de l'AP (300B) comprend des informations d'identification indiquant une pluralité de serveurs (300C, 300D) qui sont connectés à l'AP (300B), transmettre, à l'AP (300B), une trame de demande (304) de service d'annonce générique , GAS, comprenant une demande pour chacune des informations de données que l'on souhaite recevoir de chacun de la pluralité de serveurs (300C, 300D) par le dispositif électronique (300A) en réponse à la première trame, et
recevoir une trame de réponse répondant à la trame de demande de GAS de l'AP (300B), la trame de réponse comprenant les informations de données reçues de chacun de la pluralité de serveurs (300C, 300D).

2. Dispositif électronique selon la revendication 1, où le processeur (120) est en outre configuré pour obtenir les informations de données que l'on souhaite recevoir de chacun de la pluralité de serveurs (300C, 300D), à partir de la trame de réponse reçue de l'AP (300B) en réponse à la trame de demande de GAS, lorsque la trame de réponse comprend les informations d'identification.

3. Dispositif électronique (300A) selon la revendication 1,
où la première trame comprend au moins l'une parmi une trame de balise ou une trame de réponse de sonde, et
où la trame de demande de GAS et la trame de réponse comprennent une trame par laquelle les informations de données de chacun de la pluralité de serveurs (300C, 300D) connectés à l'AP (300B) peuvent être découvertes sans connexion à l'AP (300B).

4. Point d'accès, AP, prenant en charge Hotspot 2.0 (300B) comprenant :
un émetteur-récepteur ; et
un processeur configuré pour :
transmettre (301), à un dispositif électronique (300A), une première trame comprenant des informations d'identification indiquant une pluralité de serveurs (300C, 300D) qui sont connectés à l'AP (300B) avant de se connecter au dispositif électronique (300A),
recevoir (304) une trame de demande de service d'annonce générique, GAS, comprenant une demande pour chacune des informations de données que l'on souhaite recevoir de chacun de la pluralité de serveurs (300C, 300D), à partir du dispositif électronique (300A),
transmettre (305, 307) des demandes respectives pour transmettre les informations de données à chacun de la pluralité de serveurs (300C, 300D) en réponse à la trame de demande de GAS, et
transmettre (309), au dispositif électronique (300A), une trame de réponse répondant à la trame de demande de GAS, la trame de réponse comprenant les informations de données reçues de chacun de la pluralité de serveurs (300C, 300D).

5. AP selon la revendication 4, où le processeur est configuré pour demander à chacun de la pluralité de serveurs (300C, 300D) de transmettre les informations de données, lorsque la trame de demande de GAS reçue du dispositif électronique (300A) comprend les informations d'identification.

6. AP (300B) selon la revendication 4, où le processeur est configuré pour :
déterminer si un module de stockage comprend les informations de données que l'on souhaite recevoir de chacun de la pluralité de serveurs (300C, 300D),
demander à chacun de la pluralité de serveurs (300C, 300D) de transmettre les informations de données lorsque le module de stockage n'inclut pas les informations de données
obtenir les informations de données du module de stockage lorsque le module de stockage comprend les informations de données.

7. AP (300B) selon la revendication 4, où la première trame comprend au moins l'une parmi une trame de balise ou une trame de réponse de sonde, et où la trame de demande de GAS et la trame de réponse répondant à la trame de demande de GAS comprennent une trame par laquelle les informations de données de chacun de la pluralité de serveurs (300C, 300D) connectés au point d'accès (300B) peuvent être découvertes sans connexion au dispositif électronique (300A).

8. Procédé pour contrôler l'échange d'informations par un dispositif électronique (300A), le procédé comprenant :
recevoir (301), par le dispositif électronique (300A), une première trame d'un point d'accès, AP, prenant en charge Hotspot 2.0 (300B) avant de se connecter à l'AP (300B) ;
transmettre (304), par le dispositif électronique (300A), à l'AP (300B), une trame de demande de service d'annonce générique, GAS, comprenant une demande pour chacune des informations de données que l'on souhaite recevoir de chacun d'une pluralité de serveurs (300C , 300D) en réponse à la première trame, si la première trame comprend les informations d'identification indiquant la pluralité de serveurs (300C, 300D) qui sont connectés à l'AP (300B) ; et
recevoir une trame de réponse répondant à la trame de demande de GAS de l'AP (300B), la trame de réponse comprenant les informations de données reçues de chacun de la pluralité de serveurs (300C, 300D).

9. Procédé selon la revendication 8, comprenant en outre
obtenir les informations de données que l'on souhaite recevoir de chacun de la pluralité de serveurs (300C, 300D) à partir de la trame de réponse répondant à la trame de demande de GAS, si la trame de réponse comprend les informations d'identification.

10. Procédé selon la revendication 8, où la première trame comprend au moins l'une parmi une trame de balise ou une trame de réponse de sonde, et où la trame de demande de GAS et la trame de réponse comprennent une trame par laquelle les informations de données de chacun de la pluralité de serveurs (300C, 300D) connectés à l'AP (300B) peuvent être découvertes sans connexion à l'AP (300B).

11. Procédé pour contrôler la découverte par un point d'accès, AP, prenant en charge Hotspot 2.0 (300B), le procédé comprenant :
transmettre (301), à un dispositif électronique (300A), une première trame comprenant des informations d'identification indiquant une pluralité de serveurs (300C, 300D) qui sont connectés à l'AP (300B) avant de se connecter à l'AP (300B) ;
recevoir (304) une trame de demande de service d'annonce générique, GAS, comprenant une demande pour chacune des informations de données que l'on souhaite recevoir de chacun de la pluralité de serveurs (300C, 300D), du dispositif électronique (300A) ;
demander (305, 307) à chacun de la pluralité de serveurs (300C, 300D) de transmettre les informations de données ; et
transmettre (309), au dispositif électronique (300A), une trame de réponse comprenant les informations de données reçues de chacun de la pluralité de serveurs (300C, 300D), en réponse à la trame de demande de GAS.

12. Procédé selon la revendication 11, où la demande comprend la demande à chacun de la pluralité de serveurs (300C, 300D) de transmettre les informations de données, si la trame de demande de GAS reçue du dispositif électronique (300A) comprend les informations d'identification.

13. Procédé selon la revendication 11, où la demande comprend la demande à chacun de la pluralité de serveurs (300C, 300D) de transmettre les informations de données si un module de stockage ne comprend pas les informations de données que l'on souhaite recevoir de chacun de la pluralité de serveurs (300C, 300D).

14. Procédé selon la revendication 11, comprenant en outre :
si un module de stockage comprend les informations de données que l'on souhaite recevoir de chacun de la pluralité de serveurs, obtenir les informations de données du module de stockage.

15. Procédé selon la revendication 11,
où la première trame comprend au moins l'une parmi une trame de balise ou une trame de réponse de sonde, et
où la trame de demande de GAS et la trame de réponse comprennent une trame par laquelle les informations de données de chacun de la pluralité de serveurs (300C, 300D) connectés au point d'accès (300B) peuvent être découvertes sans connexion au dispositif électronique (300A).
